# EUROPÄISCHE PATENTSCHRIFT

(11) **EP 2 877 657 B1**
(45) Veröffentlichungstag und Bekanntmachung des Hinweises auf die Patenterteilung: **17.05.2017**
(21) Anmeldenummer: 13739461.5
(22) Anmeldetag: 23.07.2013
(51) Int. Cl.: E05B 47/02, F16P 3/08

(54) **ZUHALTUNG FÜR EINE ZUGANGSSCHUTZVORRICHTUNG MIT EINER HILFSENTRIEGELUNG**
TUMBLER FOR AN ACCESS PROTECTION DEVICE WITH AN EMERGENCY RELEASE
GÂCHETTE POUR DISPOSITIF DE PROTECTION D'ACCÈS À DÉVERROUILLAGE AUXILIAIRE

(30) Priorität: 24.07.2012 DE 102012106722
(43) Veröffentlichungstag der Anmeldung: 03.06.2015
(73) Patentinhaber: K.A. Schmersal Holding GmbH & Co. KG, 42279 Wuppertal (DE)
(72) Erfinder: YU, Yao, 42119 Wuppertal (DE)
(74) Vertreter: Vogel, Andreas
(86) Internationale Anmeldenummer: PCT/EP2013/065486
(87) Internationale Veröffentlichungsnummer: WO 2014/016283

(56) Entgegenhaltungen:
- EP-A1- 0 077 254
- DE-C1- 4 404 778
- FR-A1- 2 635 553

## Beschreibung

Die Erfindung betrifft eine Zuhaltung für eine Zugangsschutzvorrichtung eines verschließbaren Raumbereiches einer maschinellen Anlage, mit einem Sperrelement, das innerhalb eines Gehäuses mittels eines Antriebes zwischen einer Verriegelungsposition und einer Entriegelungsposition bewegbar ist, einem Übertragungselement, das zwischen dem Antrieb und dem Sperrelement angeordnet ist, und einer Hilfsentriegelung, mit der unabhängig vom Antrieb eine Bewegung des Sperrelements zwischen den Positionen bewirkbar ist.

Aus dem Stand der Technik sind Zuhaltungen als Teil einer Zugangsschutzeinrichtung für einen verschließbaren Raumbereich einer maschinellen Anlage bekannt. Bei den Anlagen kann es sich zum Beispiel um Maschinen oder Komponenten wie Roboter zum Herstellen, Behandeln oder Bearbeiten von Werkteilen sowie um chemische Anlagen oder dergleichen handeln. Eine Zuhaltung kann zwischen einer den Raumbereich verschließenden Tür, Klappe, Deckel oder dergleichen als beweglicher Teil und einer gegenüberliegenden, benachbarten, feststehenden Wand oder Wandung, beispielsweise einer Umgrenzung des Schutzbereichs als feststehender Teil angeordnet sein. Die gegebenenfalls mindestens eine Tür oder Klappe, die durch Schwenken oder Schieben geöffnet oder geschlossen werden kann, ist durch die Zuhaltung arretierbar, indem ein Sperrelement, insbesondere Stößel oder Bolzen der Zuhaltung, der beispielsweise an dem feststehenden Teil angeordnet ist, in eine Ausnehmung des beweglichen Teils zur Verriegelung/Arretierung einfahren kann.

In der DE 10 2009 060 532 A1 ist eine Zuhaltung der obengenannten Art offenbart, die zusätzlich eine Hilfsentriegelung aufweist, bei der das Übertragungselement beweglich gegenüber dem Sperrelement angeordnet ist und eine Entriegelung der Zuhaltung zusätzlich durch ein Bewegen des Sperrelementes unabhängig vom Antrieb durch ein manuelles Ziehen des Sperrelementes aus der verriegelnden Position möglich ist. Das Sperrelement ragt aus der Gehäuseöffnung der Zuhaltung heraus und weist eine Handhabe auf, die ein erleichtertes Ziehen durch den Benutzer ermöglicht.

Aus der EP 0 077 254 A1 ist eine Zuhaltung mit einem Sperrelement bekannt, das innerhalb eines Gehäuses mittels eines Antriebes zwischen einer Verriegelungsposition und einer Entriegelungsposition bewegbar ist. Zudem ist zwischen dem Antrieb und dem Sperrelement ein Übertragungselement angeordnet. Mittels einer Hilfsentriegelung ist unabhängig vom Antrieb eine Entsperrung möglich. Mit der ringförmigen Handhabe sowie der Kette wird dazu ein Pin herausgezogen, wodurch die Verbindung zwischen dem Übertragungselement und dem Sperrelement aufgehoben wird. Durch Federn verfährt daraufhin das Sperrelement aus der Verriegelungsposition in die Entriegelungsposition.

Aus der FR 2 635 553 A1 ist ebenfalls eine Zuhaltung mit einem Sperrelement und einem Übertragungselement bekannt, das zwischen dem Antrieb und dem Sperrelement angeordnet ist. Über eine Betätigung der Hilfsentriegelung kann das Übertragungselement bewegt werden.

Aus DE 44 04 778 C1 ist eine Zuhaltung mit einem Sperrelement und einem Übertragungselement bekannt, welches in eine Wirkverbindung mit einer Schnecke eines Motors mittels einer Hilfsentriegelung bringbar ist. Das Übertragungselement ist dabei drehfest am Gehäuse der Zuhaltung befestigt und kann nicht vom Sperrelement losgelöst werden.

Aufgabe der vorliegenden Erfindung ist es, eine Zuhaltung der genannten Art weiterzuentwickeln, bei der die Bedienerfreundlichkeit, bezogen auf die Betätigung der Hilfsentriegelung, weiter verbessert wird, wobei gleichzeitig eine kompakte Bauweise der verbesserten Zuhaltung erreicht wird.

Die genannte Aufgabe wird durch sämtliche Merkmale des Patentanspruches 1 gelöst. In den abhängigen Ansprüchen sind vorteilhafte Ausführungsformen beschrieben.

Erfindungsgemäß ist vorgesehen, dass über eine Betätigung der Hilfsentriegelung das Übertragungselement zwischen einer Koppelstellung und einer Entkoppelstellung bewegbar ist, in der Koppelstellung das Übertragungselement in Wirkverbindung mit dem Sperrelement ist, und in der Entkoppelstellung das Übertragungselement losgelöst vom Sperrelement ist, wodurch ermöglicht ist, dass das Sperrelement aus der Verriegelungsposition in die Entriegelungsposition verfährt.

Kern der Erfindung ist es hierbei, dass das Sperrelement nicht direkt vom Benutzer kontaktiert werden muss, um das Sperrelement aus der Verriegelungsposition in die Entriegelungsposition und umgekehrt verfahren zu können. Das erfindungsgemäße Übertragungselement ist zwischen der Koppelstellung und der Entkoppelstellung bewegbar, wobei in der Koppelstellung des Übertragungselementes das Sperrelement nicht aus seiner Verriegelungsposition gebracht werden kann, außer, dass der Antrieb aktiviert ist und für eine Bewegung des Sperrelementes in die Entriegelungsposition sorgt. Das bedeutet, dass das Sperrelement in der Verriegelungsposition blockiert oder arretiert ist, solange das Übertragungselement die Koppelstellung einnimmt. Wird nun über eine definierte Betätigung der Hilfsentriegelung eine Bewegung des Übertragungselementes aus der Koppelstellung in die Entkoppelstellung bewirkt, löst sich der Kontakt zwischen dem Übertragungselement und dem Sperrelement, wodurch über Mittel, die am Sperrelement angreifen können, das Sperrelement "automatisch" die Verriegelungsposition verlässt und in die Entriegelungsposition verfährt. Wenn das Sperrelement in der Entriegelungsposition sich befindet, kann zum einen das Übertragungselement noch die Entkoppelstellung einnehmen. Zum anderen ist es denkbar, dass über eine entsprechende Betätigung der Hilfsentriegelung das Übertragungselement aus der Entkoppelstellung in die Koppelstellung gebracht wird, wobei das Sperrelement sich noch in der Entriegelungsposition befindet. Ausgehend von dieser Situation kann es erfindungsgemäß vorgesehen sein, dass das Sperrelement lediglich über den Antrieb aus der Entriegelungsposition in die Verriegelungsposition verfahren werden kann, wobei gleichzeitig das Übertragungselement seine Koppelstellung innerhalb der Zuhaltung einnimmt. Ein wesentlicher Vorteil dieser Erfindung ist, dass die Handhabe zur Bewegung des Sperrelementes weiter verbessert ist. Zugleich ermöglicht die erfindungsgemäße Erfindung, dass ein direkter Zugang zum Sperrelement verhindert wird, aufgrund der erfindungsgemäßen Hilfsentriegelung, wobei insbesondere dadurch die Manipulationssicherheit erhöht werden kann. Erfindungsgemäß weist das Sperrelement einen Kraftübertragungsbereich auf, an dem das Übertragungselement in seiner Koppelstellung angreift, wobei das Übertragungselement und der Kraftübertragungsbereich eine Verzahnung aufweisen.

Erfindungsgemäß ist es denkbar, dass die Hilfsentriegelung eine für einen Benutzer zugängliche Handhabe aufweist, um eine Betätigung der Hilfsentriegelung zu ermöglichen, insbesondere dass die Handhabe eine Kontur aufweist, in die ein Werkzeug einbringbar ist. Beispielsweise ist es denkbar, dass die Handhabe eine Signalfarbe aufweisen kann, damit der Benutzer in deaktiviertem Zustand des Antriebes zum einen die Hilfsentriegelung zuverlässig lokalisieren bzw. erkennen kann. Zum anderen weist die Handhabe eine entsprechende Kontur auf, in die beispielsweise ein Spezialwerkzeug eingeführt werden kann, um das Sperrelement über eine definierte Betätigung der Hilfsentriegelung aus der Verriegelungsposition in die Entriegelungsposition zu bringen.

Erfindungsgemäß ist vorgesehen, dass ein erster Energiespeicher vorgesehen ist, der in der Verriegelungsposition des Sperrelementes Energie aufweist, die dafür sorgt, dass bei einem Wechsel des Übertragungselementes aus der Koppelstellung in die Entkoppelstellung das Sperrelement aus der Verriegelungsposition in die Entriegelungsposition verfährt.

Der erste Energiespeicher dient als technisches Mittel, um in der Entkoppelstellung des Übertragungselementes derart auf das Sperrelement zu wirken, dass das Sperrelement zuverlässig in Richtung Entriegelungsposition verfahren kann. In einer möglichen Ausgestaltung der Erfindung kann der erste Energiespeicher ein Federelement sein, der an einer definierten Stelle am Sperrelement wirkt. In der Verriegelungsposition ist das Federelement gespannt und übt eine in Richtung Entriegelungsposition wirkende Kraft auf das Sperrelement aus. Da das Übertragungselement in der Koppelstellung eine Blockierfunktion für das Sperrelement darstellt, das bedeutet, dass das Sperrelement in der Verriegelungsposition durch das Übertragungselement arretiert ist, ist ein Wechsel der Position des Sperrelementes ausgeschlossen. Erst in der Entkoppelstellung des Übertragungselementes bewirkt die vom Federelement auf das Sperrelement wirkende Kraft, dass das Sperrelement aus der Verriegelungsposition in die Entriegelungsposition verfährt.

Vorteilhafterweise ist der Antrieb als elektromotorischer Antrieb ausgestaltet, der im aktivierten Zustand das Übertragungselement antreibt, das wiederum in Wirkverbindung mit dem Sperrelement ist, wodurch eine entsprechende Bewegung des Sperrelementes aus der Verriegelungsposition in die Entriegelungsposition und umgekehrt erzielbar ist. Beispielsweise kann es vorgesehen sein, dass der Antrieb als Spindelmotor oder Schneckenmotor ausgeführt ist, dessen Spindel bzw. Schnecke in Eingriff mit einem zumindest teilweise als Schneckenrad ausgestalteten Bauteil sein kann. Dieses Bauteil kann ferner mit einer Welle verbunden sein, die das Übertragungselement antreibt. Vorteilhafterweise weist der Antrieb im nicht aktivierten Zustand eine Selbsthemmung auf, die bewirkt, dass das Sperrelement nicht aus der Verriegelungsposition in die Entriegelungsposition verfahren werden kann, solange das Übertragungselement sich in der Koppelstellung befindet.

In einer weiteren die Erfindung verbessernden Maßnahme kann das Übertragungselement entlang einer Bewegungsachse linear in seine jeweilige Stellung verfahrbar sein. In einer möglichen Ausführungsform der Erfindung kann bzw. können die Verzahnung/Verzahnungen des Übertragungselementes und/oder die Verzahnung/Verzahnungen des Sperrelementes abgerundete Zahnflanken aufweisen. Besonders vorteilhaft kann sein, dass die Zahnflanken zu allen Seiten hin abgerundet sind. Ein wesentlicher Vorteil dieser geometrischen Ausgestaltung der Zahnflanken ist, dass das Übertragungselement leicht, ohne erhebliche Reibungsverluste aus der Koppelstellung bzw. zurück in die Koppelstellung bewegt werden kann. Darüber hinaus kann eine Geräuschminimierung durch die erfindungsgemäße Ausgestaltung der Zahnflanken erreicht werden.

Besonders vorteilhaft kann sein, dass die Handhabe um eine Achse drehbar ist, wobei über eine Rotation der Handhabe eine translatorische Bewegung des Sperrelementes erzielbar ist. Beispielsweise kann die Zuhaltung derart ausgeführt sein, dass die Achse der Handhabe in der Ebene der Bewegungsachse des Übertragungselementes liegt. Alternativ ist es denkbar, dass die Achse der Handhabe senkrecht zur Ebene der Bewegungsachse des Übertragungselementes liegt. Beide Ausführungsvarianten ermöglichen, dass die Handhabe an unterschiedlichen Stellen am Gehäuse angeordnet werden kann, was insbesondere von den örtlichen Gegebenheiten, an denen die Zuhaltung angeordnet werden kann, abhängt.

Die erfindungsgemäße Zuhaltung kann an dem Übertragungselement einen Anschlag aufweisen, an dem bei einer Betätigung der Hilfsentriegelung die Handhabe angreift. Zudem kann es vorteilhaft sein, dass die Handhabe einen in Richtung des Übertragungselementes sich erstreckenden Nocken aufweist, wobei insbesondere der Nocken exzentrisch zur Achse der Handhabe angeordnet ist. Beispielsweise kann die Erfindung mit einschließen, dass der Nocken an der Anschlagfläche des Übertragungselementes angreift, wenn die Hilfsentriegelung betätigt wird. Der Nocken, der mit der Handhabe um seine Achse gedreht wird, drückt derart an dem Anschlag des Übertragungselementes, sodass das Übertragungselement translatorisch entlang seiner Bewegungsachse aus der Koppelstellung in die Entkoppelstellung bewegt werden kann. Ein Vorteil der exzentrischen Anordnung des Nockens zur Achse der Handhabe ist, dass bei der Betätigung der Hilfsentriegelung eine gute Kraftübertragung von der Handhabe auf das Übertragungselement erzielt werden kann.

Ferner kann bevorzugt sein, dass am Übertragungselement ein zweiter Energiespeicher wirkt, der in der Koppelstellung eine Energie aufweist, die dafür sorgt, dass das Übertragungselement zurück in die Koppelstellung verfährt. Der zweite Energiespeicher kann ein Federelement sein, dass in der Entkoppelstellung eine definierte Kraft auf das Übertragungselement ausübt. Ein Zurückbewegen des Übertragungselementes aus der Entkoppelstellung in die Koppelstellung aufgrund der wirkenden Federkraft des zweiten Energiespeichers ist vorteilhafterweise dadurch blockiert, dass die Handhabe eine derartige Stellung noch aufweist, die wirkungsvoll verhindert, dass das Übertragungselement seine Entkoppelstellung verlässt. Zum Beispiel ist es denkbar, dass der Nocken eine derartige Position innerhalb des Gehäuses einnimmt, dass der Anschlag des Übertragungselementes unmittelbar am Nocken anliegt und eine Zurückbewegung in die Koppelstellung des Übertragungselementes verhindert.

In einer weiteren die Erfindung verbessernden Maßnahme kann es vorgesehen sein, dass ein Schieberelement zwischen dem Übertragungselement und der Handhabe angeordnet ist, wobei insbesondere das Schieberelement bei einer Betätigung der Handhabe an dem Anschlag des Übertragungselementes angreift. Das Schieberelement kann monolithisch und/oder einstückig mit der Handhabe verbunden sein. Ebenfalls kann das Schieberelement ein separates Bauteil sein, an dem die Handhabe angreift. Ein Vorteil des Schieberelementes ist, dass hierdurch eine zuverlässige Kraftübertragung von der Handhabe auf das Übertragungselement erzielt werden kann, um das Übertragungselement in seine jeweilige Stellung zu bringen.

Denkbar ist ferner, dass eine Welle den Antrieb mit dem Übertragungselement verbindet, wobei die Welle um die Achse des Übertragungselementes rotierbar ist. Vorteilhafterweise kann ein Lagerelement vorgesehen sein, an dem das Schieberelement und/oder die Welle gelagert ist/sind. Das Lagerelement befindet sich innerhalb des Gehäuses, wobei es in einer weiteren Ausführungsform der Erfindung monolithisch und/oder einstückig mit dem Gehäuse verbunden sein kann. Während die Handhabe bei der Betätigung bewegt wird, erfolgt eine translatorische Bewegung des Schieberelementes, wobei das Lagerelement eine zuverlässige Bewegung des Schieberelementes gewährleistet. Gleichzeitig kann die Welle, die den Antrieb mit dem Übertragungselement verbindet, ebenfalls an dem Lagerelement angeordnet sein. Alternativ ist es denkbar, dass die Welle separat an einem weiteren, zweiten Lagerelement innerhalb des Gehäuses gelagert ist, insbesondere auch dann, wenn kein Schieberelement innerhalb der Zuhaltung zum Einsatz kommt.

Zudem kann die erfindungsgemäße Zuhaltung eine Handhabe mit einem Gewinde umfassen, dass eine Verbindung der Handhabe mit dem Gehäuse bewirkt, wobei während der Betätigung der Hilfsentriegelung die Handhabe um die Achse am Gehäuse, entlang des Gewindes, rotiert. Anstelle des Gewindes für die Handhabe ist es außerdem auch denkbar, dass eine Betätigung der Handhabe beispielsweise linear durch einen Druckknopf (Druckknopf weist z. B. Gleitlagerung auf und kann auch in Verbindung mit einem entsprechenden Energiespeicher stehen) durchgeführt werden kann.

Vorteilhafterweise ist die erfindungsgemäße Zuhaltung zwischen einer dem Raumbereich verschließenden Tür, Klappe, Deckel oder dergleichen als beweglicher Teil und einer gegenüberliegenden feststehenden Wandung, beispielsweise einer Umgrenzung des Schutzbereichs, als feststehender Teil anordbar. Das bedeutet, dass die Zuhaltung sowohl am feststehenden Teil oder am beweglichen Teil angeordnet werden kann.

Vorteilhafterweise ist die Zuhaltung mit einer Steuerung in Signalverbindung, um das Sperrelement entsprechend dem Betriebszustand der maschinellen Anlage in die Verriegelungsposition oder in die Entriegelungsposition zu bringen. Wenn von der maschinellen Anlage kein Gefahrenpotential für Personen mehr ausgeht, das heißt in den Raumbereich durch die Tür hineingegriffen oder der Raumbereich über die Tür begangen werden kann, in dem zum Beispiel der Steuerung ein Stillstehen der beweglichen Teile der maschinellen Anlage, zum Beispiel durch einen Stillstandswächter, signalisiert wird, gibt die Steuerung die Zuhaltung frei, sodass eine Person durch Öffnen der Tür in den Raumbereich gelangen kann. Die Zuhaltung ist dann frei, wenn das Sperrelement in der Entriegelungsposition sich befindet. Stehen jedoch zumindest Teile der maschinellen Anlage nicht still oder sind ansonsten vorzunehmende Vorkehrungen vor dem Öffnen der Türen noch nicht getroffen, wird die Zuhaltung blockiert, das bedeutet, dass das Sperrelement in die Verriegelungsposition verfährt. Somit können die Türen des Raumbereiches, der zu schützen ist, nicht geöffnet werden. Die Steuerung kann derart ausgebildet sein, dass ein Inbetriebnehmen der maschinellen Anlage bei einer geöffneten Tür und/oder bei einem in der Entriegelungsposition sich befindenden Sperrelement verhindert ist.

Bei der Ausgestaltung des ersten und/oder des zweiten Energiespeichers als Federelement, ist eine Umwandlung von kinetischer Energie des Übertragungselementes oder des Sperrelementes in eine potentielle Energie des ersten oder des zweiten Federelementes möglich.

Der Kraftübertragungsbereich des Sperrelementes kann als Zahnstange ausgebildet sein, wobei in einem möglichen Ausführungsbeispiel der Erfindung der Kraftübertragungsbereich sowie das Sperrelement miteinander gekoppelt sind. Denkbar ist, dass der Kraftübertragungsbereich mit dem Sperrelement fest miteinander verbunden ist oder dass das Sperrelement und der Kraftübertragungsbereich des Sperrelementes ein gemeinsames, monolithisches Bauteil bilden. Denkbar ist, dass das Sperrelement sowie der Kraftübertragungsbereich aus unterschiedlichen Materialien ausgebildet sind. Dieses kann daran liegen, dass der Bereich des Sperrelementes, der aus der Zuhaltung in der Verriegelungsposition herausragt, andere Materialanforderungen hat, als der Kraftübertragungsbereich, an dem das Übertragungselement angreift.

Vorteilhafterweise kann eine Sicherheitsvorrichtung innerhalb der Zuhaltung vorgesehen sein, die wirkungsvoll ermöglichen kann, dass das Sperrelement beim Verriegelungsvorgang nicht auf eine außerhalb des Gehäuses sich befindende Blockade fahren kann, was im schlimmsten Fall mit Materialzerstörungen innerhalb der Zuhaltung oder am Sperrelement verbunden wäre.

Weitere Vorteile, Merkmale und Einzelheiten der Erfindung ergeben sich aus der nachfolgenden Beschreibung, in der unter Bezugnahme auf die Zeichnungen mehrere Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen:
- Figur 1: eine schematische Ansicht einer Zuhaltung mit einem Sperrelement und einem Übertragungselement, wobei das Sperrelement in der Entriegelungsposition und das Übertragungselement in der Koppelstellung sich befinden,
- Figur 2: die Zuhaltung gemäß Figur 1, wobei das Sperrelement sich in der Verriegelungsposition befindet und das Übertragungselement die Koppelstellung einnimmt,
- Figur 3: die Zuhaltung gemäß Figur 1, wobei das Sperrelement in der Verriegelungsposition und das Übertragungselement in der Entkoppelstellung sich befinden,
- Figur 4: die Zuhaltung gemäß Figur 1, wobei das Sperrelement in der Entriegelungsposition und das Übertragungselement in der Entkoppelstellung sich befinden,
- Figur 5: eine vergrößerte Teilansicht der Zuhaltung gemäß Figur 1,
- Figur 6: eine vergrößerte Teilansicht der Zuhaltung gemäß Figur 3,
- Figur 7: eine vereinfachte Draufsicht auf die Zuhaltung gemäß Figur 5 und
- Figur 8: ein weiteres Ausführungsbeispiel einer möglichen Zuhaltung.

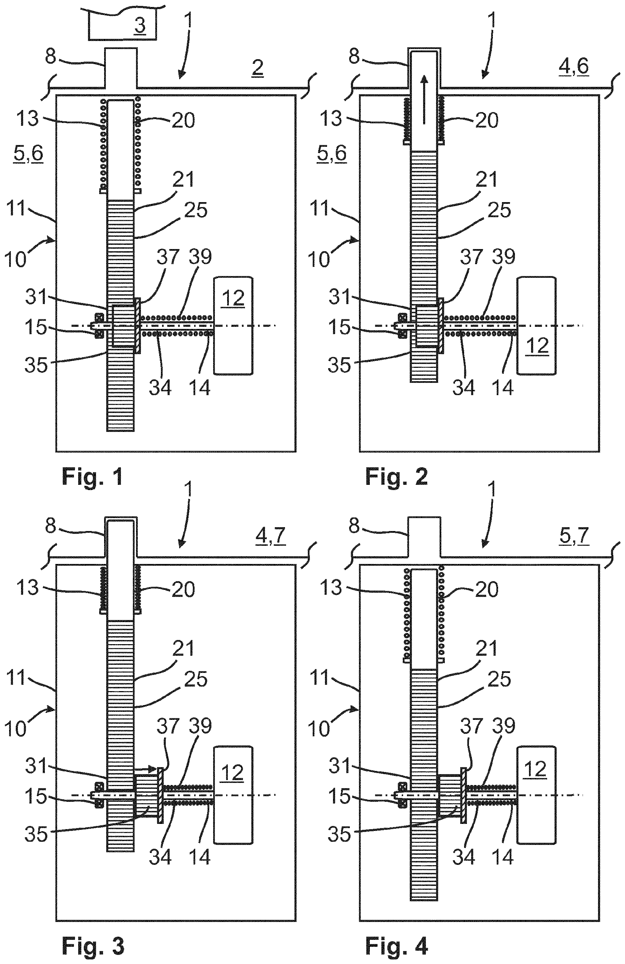

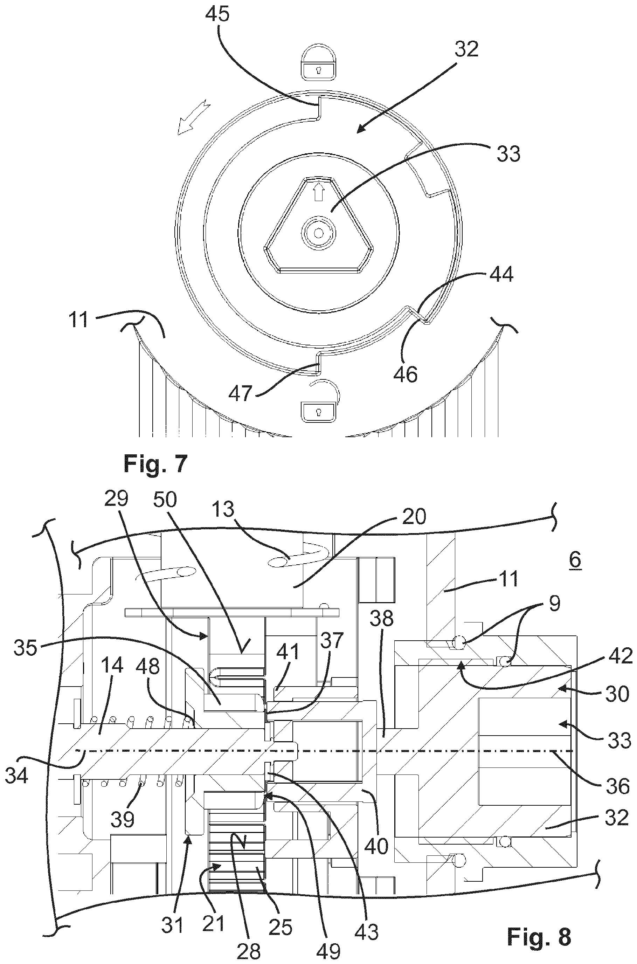

Figur 1 und Figur 8 zeigen zwei mögliche Ausführungsformen einer Zuhaltung 10, die für eine Zugangsschutzvorrichtung 1 eines verschließbaren Raumbereiches 2 einer maschinellen Anlage 3 einsetzbar ist. Hierbei weist die Zuhaltung 10 ein Sperrelement 20 auf, dass innerhalb eines Gehäuses 11 mittels eines Antriebes 12 zwischen einer Verriegelungsposition 4, die in Figur 2 und Figur 3 gezeigt ist und einer Entriegelungsposition 5, die in Figur 1 und Figur 4 gezeigt ist, bewegbar ist.

Die Zuhaltung 10 verfügt über ein Übertragungselement 31, das zwischen dem Antrieb 12 und dem Sperrelement 20 angeordnet ist. Vorzugsweise ist der Antrieb 12 als Elektromotor ausgebildet, wobei der Antrieb 12 über eine rotierende Welle 14 mit dem Übertragungselement 31 verbunden ist. Die Welle 14 ist um eine Achse 34 des Übertragungselementes 31 rotierbar. In beiden Ausführungsbeispielen gemäß Figur 1 sowie Figur 8 weist das Sperrelement 20 zumindest bereichsweise einen Kraftübertragungsbereich 21 auf, an dem das Übertragungselement 31 in seiner Koppelstellung 6 angreift. Gemäß Figur 1 und Figur 8 weist das Übertragungselement 31 sowie der Kraftübertragungsbereich 21 des Sperrelementes 20 eine Verzahnung 25, 35 auf, wobei beide Verzahnungen 25, 35 formschlüssig ineinander greifen.

Wenn nun der Antrieb 12 gemäß Figur 1 sowie Figur 8 aktiviert wird, erfolgt eine Rotation der Welle 14 sowie des Übertragungselementes 31 um die Achse 34, wobei gleichzeitig die Verzahnungen 25, 35 ineinander greifen, wodurch das Sperrelement 20, ausgehend von der Entriegelungsposition 5 gemäß Figur 1 in Richtung Verriegelungsposition 4 gemäß Figur 2 linear bewegt wird. In Figur 2 befindet sich das Sperrelement 20 in einer Öffnung 8 der Zugangsschutzvorrichtung 1, wodurch der Raumbereich 2 verriegelt ist und ein Zugang an die maschinelle Anlage 3 verhindert ist.

Gemäß des Ausführungsbeispiels aus Figur 1 ist die Welle 14 zuverlässig an diversen Bereichen gelagert, wobei exemplarisch hierfür die Lagerstelle 15 gezeigt ist.

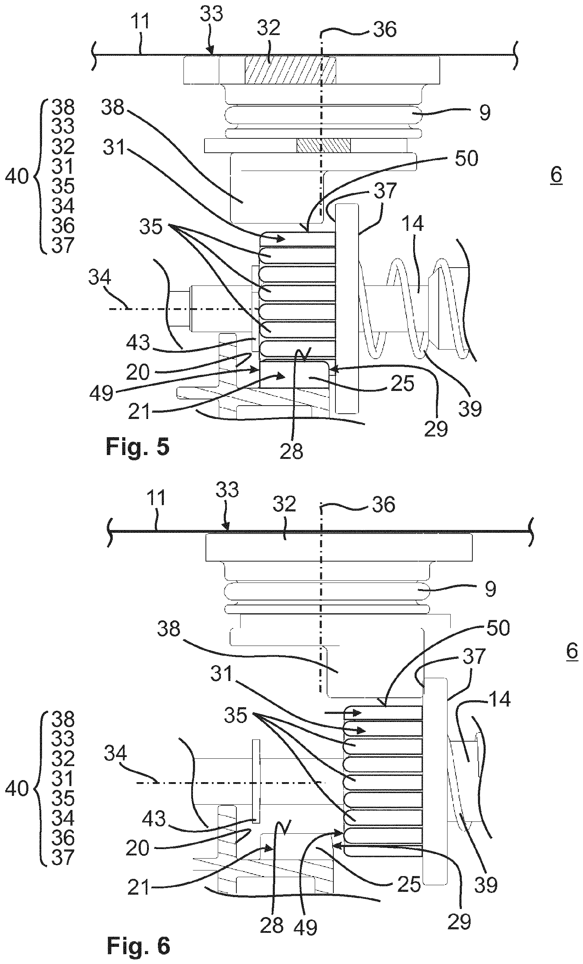

In beiden Ausführungsbeispielen gemäß Figur 1 und Figur 8 lässt sich das Übertragungselement 31 über eine Hilfsentriegelung 30 aus der Koppelstellung 6, bei der beide Verzahnungen 25, 35 ineinandergreifen, in eine Entkoppelstellung 7 bringen, die in Figur 3, 4 sowie Figur 6 gezeigt ist. Das Übertragungselement 31 ist relativ zur Welle 14 linear entlang der Bewegungsachse 34 verschiebbar, worauf im Folgenden noch eingegangen wird. Die Bewegung des Übertragungselementes 31 aus der Koppelstellung 6 in die Entkoppelstellung 7 erfolgt über die Hilfsentriegelung 30, insbesondere über die Handhabe 32, gemäß Figur 5 sowie Figur 8. Die Handhabe 32 weist eine Kontur 33 auf, welches in Figur 7 und Figur 8 gezeigt ist. In die Kontur 33 ist ein Werkzeug einbringbar, um die Handhabe 32 um die Achse 36 zu drehen. Die Handhabe 32 gemäß Figur 5 weist einen in Richtung des Übertragungselementes 31 sich erstreckenden Nocken 38 auf, der exzentrisch zur Achse 36 der Handhabe 32 angeordnet ist. Erfolgt nun gemäß Figur 5 eine Drehung der Handhabe 32 um die Achse 36, rotiert die Handhabe 32, wobei gleichzeitig der Nocken 38 gegen einen Anschlag 37 des Übertragungselementes 31 wirkt, wodurch das Übertragungselement 31 aus der Koppelstellung 6 in die Entkoppelstellung 7 linear entlang der Achse 34 verschoben wird. Dieses ist exemplarisch in Figur 3, 4 sowie Figur 6 gezeigt. In der Entkoppelstellung 7 des Übertragungselementes 31 befindet sich die Verzahnung 35 losgelöst und beabstandet zur Verzahnung 25. Da in der Verriegelungsposition 4, die in Figur 2 und Figur 3 gezeigt ist, ein erster Energiespeicher 13 eine definierte potentielle Energie aufweist und eine Kraft auf das Sperrelement 13 in Richtung des Übertragungselementes 31 ausübt, verfährt das Sperrelement 20 in der Entkoppelstellung 7 des Übertragungselementes 31 automatisch aus der Verriegelungsposition 4 in die Entriegelungsposition 5. Der erste Energiespeicher 13 ist ein Federelement, das über das Sperrelement 20 gespannt wird, in dem das Sperrelement 20 aus der Entriegelungsposition 5 gemäß Figur 1 in die Verriegelungsposition 4 gemäß Figur 2 verfahren wird.

Zwischen dem Übertragungselement 31 und dem Antrieb 12 gemäß Figur 1 und Figur 8 befindet sich ein zweiter Energiespeicher 39, wobei der zweite Energiespeicher 39 in der Entkoppelstellung 7 eine definierte Energie aufweist, insbesondere gespannt ist und eine Kraft auf den Anschlag 37, 48 des Übertragungselementes 31 ausübt. Aufgrund der definierten Stellung der Handhabe 32 sowie des Nockens 38, ist es für den Energiespeicher 39 nicht möglich, das Übertragungselement 31 aus der Entkoppelstellung 7 in die Koppelstellung 6 zu bewegen. Hierfür ist es notwendig, dass die Handhabe 32 wieder über die Einführung eines Werkzeuges in die Kontur 33 der Handhabe 32 zurückgedreht wird. Die Handhabe 32 gemäß Figur 5 und Figur 8 weist zudem eine Dichtung 9 auf, sodass zuverlässig das Innere der Zuhaltung 10 vor Umwelteinflüssen, wie Feuchtigkeit, Schmutz etc. geschützt ist. Zudem ist an der Welle 14 ein Sicherungsring 43 angeordnet, der zuverlässig das Übertragungselement 31 in der Koppelstellung 6 hält.

In Figur 7 ist beispielhaft eine mögliche Ausführungsform der Handhabe 32 mit einer möglichen Kontur 33 gezeigt, in die ein Werkzeug eingeführt werden kann, um die Handhabe 32 entsprechend um die Achse 36 zu rotieren. Zudem verfügt die Handhabe 32 über zwei Anschläge 44, 45, die wiederum mit Gegenanschlägen 46, 47 zusammenwirken. Die Gegenanschläge 46, 47 sind gehäuseseitig 11 angeordnet. Im gezeigten Ausführungsbeispiel gemäß Figur 7 liegt der Anschlag 44 am Gegenanschlag 46 an. Befindet sich nun das Sperrelement 20 in der Verriegelungsposition 4 und ist es erforderlich, manuell unabhängig vom Antrieb 12 das Sperrelement 20 aus der Verriegelungsposition 4 in die Entriegelungsposition 5 zu bewegen, erfolgt über ein entsprechendes Werkzeug eine Bewegung der Handhabe 32 gegen den Uhrzeigersinn eine Verschiebung des Übertragungselementes 31 aus der Koppelstellung 6 in die Entkoppelstellung 7. Die Handhabe 32 wird soweit um die Achse 36 rotiert, bis der Anschlag 45 den Gegenanschlag 47 kontaktiert. Hat die Handhabe 32 diese Position erreicht, befindet sich der Nocken 38 unmittelbar am Anschlag 37 des Übertragungselementes 31, wobei gleichzeitig durch die Bewegung des Nockens 38 das Übertragungselement 31 in die Entkoppelstellung 7 befördert wurde.

Gemäß des Ausführungsbeispiels aus Figur 5, liegt die Achse 36 der Handhabe 32 senkrecht zur Ebene der Bewegungsachse 34 des Übertragungselementes 31. Eine derartige Anordnung kann entsprechend den technischen Gegebenheiten notwendig sein. Ebenfalls ist es denkbar, dass die Achse 36 der Handhabe 32 in der Ebene der Bewegungsachse 34 des Übertragungselementes 31 liegt, welches in Figur 8 vorgesehen ist. Die Ausführungsform gemäß Figur 8 entspricht im Wesentlichen dem Ausführungsbeispiel gemäß Figur 1 bzw. gemäß Figur 5, wobei ein Schieberelement 40 zwischen dem Übertragungselement 31 und der Handhabe 32 angeordnet ist. Das Schieberelement 40 greift bei einer Betätigung der Handhabe 32 an dem Anschlag 37 des Übertragungselementes 31 an. Zudem ist ein Lagerelement 41 vorgesehen, an dem das Schieberelement 40 sowie die Welle 14, die den nicht explizit dargestellten Antrieb mit dem Übertragungselement 31 verbindet, gelagert sind. Der erste Energiespeicher 13 sowie der zweite Energiespeicher 39, haben die gleiche Funktion, wie gemäß Figur 1 bzw. Figur 5. Zudem verfügt die Handhabe 32 über ein Gewinde 42, das eine Verbindung der Handhabe 32 mit dem Gehäuse 11 bewirkt. Anstelle des Gewindes 42 für die Handhabe 32 ist es außerdem auch denkbar, dass eine Betätigung der Handhabe 32 beispielsweise durch einen Druckknopf (Druckknopf weist z. B. Gleitlagerung auf und kann auch in Verbindung mit einem vergleichbaren Energiespeicher 39 stehen) durchgeführt werden kann. Über eine Drehung bzw. Rotation der Handhabe 32 (mit dem Gewinde 42) um die Achse 36 verfährt der Nocken 38 des Übertragungselementes 31 in Richtung des Übertragungselementes 31, wobei gleichzeitig das Schieberelement 40 mit bewegt wird. Hierdurch wird erreicht, dass das Schieberelement 40 eine definierte Kraft am Anschlag 37 des Übertragungselementes 31 ausübt, wodurch das Übertragungselement 31 aus der Koppelstellung 6, die in Figur 8 gezeigt ist, in die Entkoppelstellung 7 verfahren wird. Die Entkoppelstellung 7 ist nicht explizit dargestellt, diese entspricht jedoch im Wesentlichen der Ausführungsform gemäß Figur 3 bzw. Figur 6. Da die Verzahnungen 25, 35 nicht mehr ineinandergreifen, erfolgt über den ersten Energiespeicher 13 eine Bewegung des Sperrelementes 20 aus der Verriegelungsposition 4 in die Entriegelungsposition 5.

Wie besonders Figur 5, Figur 6 und Figur 8 zeigen, weisen die Verzahnungen 25, 35 abgerundete Zahnflanken auf, welches besonders bei der Bewegung des Übertragungselementes 31 zwischen der Koppelstellung 6 und der Entkoppelstellung 7 vorteilhaft ist, insbesondere möglichst geringe Reibungsverluste und ein geringer Verschleiß zu verzeichnen ist.

Gemäß Figur 6 und Figur 8 weist das Übertragungselement 31 eine freie Stirnseite 49 auf. Die Verzahnung 35 ist an ihrer Stirnseite 49 abgerundet, zugleich ist jede Zahnflanke der Verzahnung 35 an ihrem freien oberen Ende 50 abgerundet. Ebenso weist das Sperrelement 20 eine freie Stirnseite 29 auf. Die Verzahnung 25, insbesondere die Zahnflanken des Sperrelementes 20 sind sowohl zur freien Stirnseite 29 als auch am oberen freien Ende 28 der Verzahnung 25 abgerundet.

### Bezugszeichenliste

- 1: Zugangsschutzvorrichtung
- 2: Raumbereich
- 3: Anlage
- 4: Verriegelungsposition
- 5: Entriegelungsposition
- 6: Koppelstellung
- 7: Entkoppelstellung
- 8: Öffnung
- 9: Dichtung

- 10: Zuhaltung
- 11: Gehäuse
- 12: Antrieb
- 13: erster Energiespeicher, Federelement
- 14: Welle
- 15: Lager

- 20: Sperrelement
- 21: Kraftübertragungsbereich
- 25: Verzahnung von 21
- 28: freies Ende von 25
- 29: freie Stirnseite von 20

- 30: Hilfsentriegelung
- 31: Übertragungselement
- 32: Handhabe
- 33: Kontur
- 34: Bewegungsachse von 31
- 35: Verzahnung von 31
- 36: Achse von 32
- 37: Anschlag
- 38: Nocken von 32
- 39: zweiter Energiespeicher

- 40: Schieberelement
- 41: Lagerelement
- 42: Gewinde
- 43: Sicherungsring
- 44: Anschlag
- 45: Anschlag
- 46: Gegenanschlag für 44
- 47: Gegenanschlag für 45
- 48: Anschlag für 39
- 49: freie Stirnseite von 31

- 50: freies Ende von 35

## Patentansprüche

1. Zuhaltung (10) für eine Zugangsschutzvorrichtung (1) eines verschließbaren Raumbereiches (2) einer maschinellen Anlage (3), mit
einem Sperrelement (20), das innerhalb eines Gehäuses (11) mittels eines Antriebes (12) zwischen einer Verriegelungsposition (4) und einer Entriegelungsposition (5) bewegbar ist,
einem Übertragungselement (31), das zwischen dem Antrieb (12) und dem Sperrelement (20) angeordnet ist, und
einer Hilfsentriegelung (30), mit der unabhängig vom Antrieb (12) eine Bewegung des Sperrelements (20) zwischen den Positionen (4,5) bewirkbar ist,
wobei über eine Betätigung der Hilfsentriegelung (30) das Übertragungselement (31) zwischen einer Koppelstellung (6) und einer Entkoppelstellung (7) bewegbar ist,
in der Koppelstellung (6) das Übertragungselement (31) in Wirkverbindung mit dem Sperrelement (20) ist, und wobei
in der Entkoppelstellung (7) das Übertragungselement (31) losgelöst vom Sperrelement (20) ist, wodurch ermöglicht ist, dass das Sperrelement (20) aus der Verriegelungsposition (4) in die Entriegelungsposition (5) verfährt,
**dadurch gekennzeichnet,**
**dass** das Sperrelement (20) einen Kraftübertragungsbereich (21) aufweist, an dem das Übertragungselement (31) in seiner Koppelstellung (6) angreift, wobei das Übertragungselement (31) und der Kraftübertragungsbereich (21) eine Verzahnung (25, 35) aufweisen.

2. Zuhaltung (10) nach Anspruch 1,
**dadurch gekennzeichnet,**
**dass** die Hilfsentriegelung (30) eine für einen Benutzer zugängliche Handhabe (32) aufweist, um eine Betätigung der Hilfsentriegelung (30) zu ermöglichen, insbesondere dass die Handhabe (32) eine Kontur (33) aufweist, in die ein Werkzeug einbringbar ist.

3. Zuhaltung (10) nach Anspruch 1 oder 2,
**dadurch gekennzeichnet,**
**dass** ein erster Energiespeicher (13) vorgesehen ist, der in der Verriegelungsposition (4) des Sperrelementes (20) Energie aufweist, die dafür sorgt, dass bei einem Wechsel des Übertragungselementes (31) aus der Koppelstellung (6) in die Entkoppelstellung (7) das Sperrelement (20) aus der Verriegelungsposition (4) in die Entriegelungsposition (5) verfährt.

4. Zuhaltung (10) nach einem der vorhergehenden Ansprüche,
**dadurch gekennzeichnet,**
**dass** der Antrieb (12) ein Elektromotor ist, wobei insbesondere der Antrieb (12) in der Verriegelungsposition (4) und/oder in der Entriegelungsposition (5) stromlos geschaltet ist.

5. Zuhaltung (10) nach einem der vorhergehenden Ansprüche,
**dadurch gekennzeichnet,**
**dass** das Übertragungselement (31) entlang einer Bewegungsachse (34) linear in seine jeweilige Stellung (6,7) verfahrbar ist.

6. Zuhaltung (10) nach Anspruch 2,
**dadurch gekennzeichnet,**
**dass** die Handhabe (32) um eine Achse (36) drehbar ist, wobei über eine Rotation der Handhabe (32) eine translatorische Bewegung des Sperrelementes (20) erzielbar ist.

7. Zuhaltung (10) nach Anspruch 6,
**dadurch gekennzeichnet,**
**dass** die Achse (36) der Handhabe (32) in der Ebene der Bewegungsachse (34) des Übertragungselementes (31) liegt oder dass die Achse (36) der Handhabe (32) senkrecht zur Ebene der Bewegungsachse (34) des Übertragungselementes (31) liegt.

8. Zuhaltung (10) nach Anspruch 2,
**dadurch gekennzeichnet,**
**dass** das Übertragungselement (31) einen Anschlag (37) aufweist, an dem bei einer Betätigung der Hilfsentriegelung (30) die Handhabe (32) angreift.

9. Zuhaltung (10) nach Anspruch 2,
**dadurch gekennzeichnet,**
**dass** die Handhabe (32) einen in Richtung des Übertragungselementes (31) sich erstreckenden Nocken (38) aufweist, wobei insbesondere der Nocken (38) exzentrisch zur Achse (36) der Handhabe (32) angeordnet ist.

10. Zuhaltung (10) nach einem der vorhergehenden Ansprüche,
**dadurch gekennzeichnet,**
**dass** am Übertragungselement (31) ein zweiter Energiespeicher (39) wirkt, der in der Entkoppelstellung (7) eine Energie aufweist, die dafür sorgt, dass das Übertragungselement (31) zurück in die Koppelstellung (6) verfährt, Insbesondere dass der zweite Energiespeicher (39) auf das Übertragungselement (31) wirkt, insbesondere dass der zweite Energiespeicher (39) auf den Anschlag (37) des Übertragungselementes (31) wirkt.

11. Zuhaltung (10) nach Anspruch 2,
**dadurch gekennzeichnet,**
**dass** ein Schieberelement (40) zwischen dem Übertragungselement (31) und der Handhabe (32) angeordnet ist, wobei insbesondere das Schieberelement (40) bei einer Betätigung der Handhabe (32) an dem Anschlag (37) des Übertragungselementes (31) angreift.

12. Zuhaltung (10) nach Anspruch 6,
**dadurch gekennzeichnet,**
**dass** eine Welle (14) den Antrieb (12) mit dem Übertragungselement (31) verbindet, wobei die Welle (14) um die Achse (36) des Übertragungselementes (31) rotierbar ist.

13. Zuhaltung (10) nach Anspruch 11 oder 12,
**dadurch gekennzeichnet,**
**dass** ein Lagerelement (41) vorgesehen ist, an dem das Schieberelement (40) und/oder die Welle (14) gelagert ist/sind.

14. Zuhaltung (10) nach Anspruch 6,
**dadurch gekennzeichnet,**
**dass** die Handhabe (32) ein Gewinde (42) aufweist, das eine Verbindung der Handhabe (32) mit dem Gehäuse (11) bewirkt, wobei während der Betätigung der Hilfsentriegelung (30) die Handhabe (32) um die Achse (36) am Gehäuse (11) rotiert.

15. Zuhaltung (10) nach einem der vorhergehenden Ansprüche,
**dadurch gekennzeichnet,**
**dass** die Verzahnung (25, 35) des Übertragungselementes (31) und/oder die Verzahnung (25) des Sperrelementes (20) abgerundete Zahnflanken aufweisen.

## Claims

1. Locking (10) for an access protection device (1) of a closable space section (2) of a machine unit (3) with a locking element (20) which is movable within a housing (11) between a locking position (4) and an unlocking position (5) via a drive (12), a transmission element (31) which is arranged between the drive (12) and the locking element (20), and an auxiliary unlocking (30) with which a movement of the locking element (20) is achievable between the positions (4, 5) independent of the drive (30), wherein via an actuation of the auxiliary unlocking (30) the transmission element (31) is movable between a coupling position (6) and an uncoupling position (7), in the coupling position (6) the transmission element (31) is in an operative connection with the locking element (20), and wherein in the uncoupling position (7) the transmission element (31) is released from the locking element (20), whereby it is enabled that the locking element (20) moves from the locking position (4) into the unlocking position (5),
**characterized in that**
the locking element (20) comprises a force transmission section (21) at which the transmission element (31) engages in the coupling position (6), wherein the transmission element (31) and the force transmission section (21) comprise a toothing (25, 35).

2. Locking (10) according to claim 1,
**characterized in that**
the auxiliary unlocking (30) comprises a handle (32) which is accessible for the user, in order to enable an actuation of the auxiliary unlocking (30), particularly that the handle (32) comprises a contour (33) in which a tool is insertable.

3. Locking (10) according to claim 1 or 2,
**characterized in that**
a first energy storage (13) is intended which comprises energy in the locking position (4) of the locking element (20) which serves for moving the locking element (20) from the locking position (4) into the unlocking position (5) during a change of the transmission element (31) from the coupling position (6) into the uncoupling position (7).

4. Locking (10) according to one of the proceeding claims,
**characterized in that**
the drive (12) is an electric motor, wherein particularly the drive (12) is switched currentless in the locking position (4) and/or the unlocking position (5).

5. Locking (10) according to one of the proceeding claims,
**characterized in that**
the transmission element (31) is linear movable into its respective position (6, 7) along a movement axis (34).

6. Locking (10) according to claim 2,
**characterized in that**
the handle (32) is pivotable about an axis (36), wherein via a rotation of the handle (32) a translational movement of the locking element (20) is achievable.

7. Locking (10) according to claim 6,
**characterized in that**
the axis (36) of the handle (32) is in the plane of the movement axis (34) of the transmission element (31) or that the axis (36) of the handle (32) is perpendicular to the plane of the movement axis (34) of the transmission element (31).

8. Locking (10) according to claim 2,
**characterized in that**
the transmission element (31) comprises a stop (37) at which the handle (32) engages during an actuation of the auxiliary unlocking (30).

9. Locking (10) according to claim 2,
**characterized in that**
the handle (32) comprises a cam (38) extending in the direction of the transmission element (31), wherein particularly the cam (38) is assembled eccentrically to the axis (36) of the handle (32).

10. Locking (10) according to one of the proceeding claims,
**characterized in that**
at the transmission element (31) a second energy storage (39) acts which comprises an energy in the uncoupling position (7) which serves for moving the transmission element (31) back into the coupling position (6), particularly that the second energy storage (39) acts on the transmission element (31), particularly that the second energy storage (39) acts on the stop (37) of the transmission element (31).

11. Locking (10) according to claim 2,
**characterized in that**
a shifting element (40) is arranged between the transmission element (31) and the handle (32), wherein particularly the shifting element (40) engages with an actuation of the handle (32) at the stop (37) of the transmission element (31).

12. Locking (10) according to claim 6,
**characterized in that**
a shaft (14) connects the drive (12) with the transmission element (31), wherein the shaft (14) is rotatable around the axis (36) of the transmission element (31).

13. Locking (10) according to claim 11 or 12,
**characterized in that**
a bearing element (41) is provided which is supported at the shifting element (40) and/or the shaft (14).

14. Locking (10) according to claim 6,
**characterized in that**
the handle (32) comprises a thread (42) which affects a connection of the handle (32) and the housing (11), wherein during the actuation of the auxiliary unlocking (30) the handle (32) rotates about the axis (36) at the housing (11).

15. Locking (10) according to one of the proceeding claims,
**characterized in that**
the toothing (25, 35) of the transmission element (31) and/or the toothing (25) of the locking element (20) comprises rounded tooth flanks.

## Revendications

1. Gâchette (10) pour un dispositif de protection d'accès (1) d'un espace verrouillable (2) d'une installation mécanique (3), comprenant
un élément de blocage (20) qui peut être déplacé à l'intérieur d'un boîtier (11) au moyen d'un entraînement (12) entre une position de verrouillage (4) et une position de déverrouillage (5),
un élément de transmission (31) disposé entre l'entraînement (12) et l'élément de blocage (20), et
un déverrouillage auxiliaire (30) qui permet de produire un déplacement de l'élément de blocage (20) entre les positions (4, 5) indépendamment de l'entraînement (12),
un actionnement du déverrouillage auxiliaire (30) permettant de déplacer l'élément de transmission (31) entre une position d'accouplement (6) et une position de désaccouplement (7),
dans la position d'accouplement (6) l'élément de transmission (31) étant en liaison fonctionnelle avec l'élément de blocage (20), et
dans la position de désaccouplement (7) l'élément de transmission (31) étant dégagé de l'élément de blocage (20), permettant ainsi à l'élément de blocage (20) de se déplacer de la position de verrouillage (4) dans la position de déverrouillage (5),
**caractérisée en ce**
**que** l'élément de blocage (20) présente une zone de transmission de force (21) sur laquelle l'élément de transmission (31) agit dans sa position d'accouplement (6), l'élément de transmission (31) et la zone de transmission de force (21) présentant une denture (25, 35).

2. Gâchette (10) selon la revendication 1,
**caractérisée en ce**
**que** le déverrouillage auxiliaire (30) présente un moyen de maniement (32) accessible à un utilisateur pour permettre un actionnement du déverrouillage auxiliaire (30), en particulier que le moyen de maniement (32) présente un contour (33) dans lequel un outil peut être introduit.

3. Gâchette (10) selon la revendication 1 ou 2,
**caractérisée en ce**
**qu'**un premier accumulateur d'énergie (13) est prévu, qui présente de l'énergie dans la position de verrouillage (4) de l'élément de blocage (20), qui fait en sorte que, lors d'un passage de l'élément de transmission (31) de la position d'accouplement (6) dans la position de désaccouplement (7), l'élément de blocage (20) se déplace de la position de verrouillage (4) dans la position de déverrouillage (5).

4. Gâchette (10) selon l'une des revendications précédentes,
**caractérisée en ce**
**que** l'entraînement (12) est un moteur électrique, l'entraînement (12) étant en particulier mis hors tension dans la position de verrouillage (4) et/ou dans la position de déverrouillage (5).

5. Gâchette (10) selon l'une des revendications précédentes,
**caractérisée en ce**
**que** l'élément de transmission (31) est déplaçable linéaire dans sa position respective (6, 7) le long d'un axe de déplacement (34).

6. Gâchette (10) selon la revendication 2,
**caractérisée en ce**
**que** le moyen de maniement (32) peut tourner autour d'un axe (36), une rotation du moyen de maniement (32) permettant de réaliser un mouvement de translation de l'élément de blocage (20).

7. Gâchette (10) selon la revendication 6,
**caractérisée en ce**
**que** l'axe (36) du moyen de maniement (32) se situe dans le plan de l'axe de déplacement (34) de l'élément de transmission (31) ou que l'axe (36) du moyen de maniement (32) est perpendiculaire au plan de l'axe de déplacement (34) de l'élément de transmission (31).

8. Gâchette (10) selon la revendication 2,
**caractérisée en ce**
**que** l'élément de transmission (31) présente une butée (37) sur laquelle le moyen de maniement (32) agit lors d'un actionnement du déverrouillage auxiliaire (30).

9. Gâchette (10) selon la revendication 2,
**caractérisée en ce**
**que** le moyen de maniement (32) présente une came (38) s'étendant dans la direction de l'élément de transmission (31), la came (38) étant en particulier disposée excentriquement par rapport à l'axe (36) du moyen de maniement (32).

10. Gâchette (10) selon l'une des revendications précédentes,
**caractérisée en ce**
**qu'**un deuxième accumulateur d'énergie (39) agit sur l'élément de transmission (31), lequel présente une énergie dans la position de désaccouplement (7), qui fait en sorte que l'élément de transmission (31) revienne dans la position d'accouplement (6), en particulier que le deuxième accumulateur d'énergie (39) agit sur l'élément de transmission (31), en particulier que le deuxième accumulateur d'énergie (39) agit sur la butée (37) de l'élément de transmission (31).

11. Gâchette (10) selon la revendication 2,
**caractérisée en ce**
**qu'**un élément coulissant (40) est disposé entre l'élément de transmission (31) et le moyen de maniement (32), en particulier l'élément coulissant (40) agissant sur la butée (37) de l'élément de transmission (31) lors d'un actionnement du moyen de maniement (32).

12. Gâchette (10) selon la revendication 6,
**caractérisée en ce**
**qu'**un arbre (14) relie l'entraînement (12) à l'élément de transmission (31), l'arbre (14) pouvant tourner autour de l'axe (36) de l'élément de transmission (31).

13. Gâchette (10) selon la revendication 11 ou 12,
**caractérisée en ce**
**qu'**un élément de support (41) est prévu, sur lequel l'élément coulissant (40) et/ou l'arbre (14) repose(nt).

14. Gâchette (10) selon la revendication 6,
**caractérisée en ce**
**que** le moyen de maniement (32) présente un filetage (42) qui produit une liaison du moyen de maniement (32) avec le boîtier (11), le moyen de maniement (32) tournant autour de l'axe (36) sur le boîtier (11) pendant l'actionnement du déverrouillage auxiliaire (30).

15. Gâchette (10) selon l'une des revendications précédentes,
**caractérisée en ce**
**que** la denture (25, 35) de l'élément de transmission (31) et/ou la denture (25) de l'élément de blocage (20) présentent des flancs de dent arrondis.
